# EUROPÄISCHE PATENTANMELDUNG

(11) **EP 1 306 205 A1**
(43) Veröffentlichungstag der Anmeldung: **02.05.2003**
(21) Anmeldenummer: 02021939.0
(22) Anmeldetag: 30.09.2002
(51) Int. Cl.: B32B 3/24, B60R 13/02

(54) **Verkleidungselement für den Innenraum eines Fahrzeugs und Verfahren zu seiner Herstellung**

(30) Priorität: 29.10.2001 DE 10152759
(71) Anmelder: Johnson Controls GmbH, 51399 Burscheid (DE)
(72) Erfinder: Ludwiller, Guy, 67150 Hindisheim (FR); Meisberger, Josef, 66646 Marpingen (DE)
(74) Vertreter: Hemmelmann, Klaus

(57) **Zusammenfassung**

Ein Verkleidungselement (1) für den Innenraum eines Fahrzeugs, insbesondere der Dachhimmel (12) eines Kraftfahrzeugs, umfaßt ein mit Ausnehmungen (3) versehenes, plattenförmiges Bauteil (2), das mit einem textilen, luftdurchlässigen Flächengebilde (7) verkleidet ist. Das textile Flächengebilde (7) ist dabei innenraumseitig angeordnet und das plattenförmige Bauteil (2) auf seiner der Fahrzeugkarosserie zugewandten Seite mittels einer Sperrschicht (8) luftdicht verschließbar. Auf diese Weise wird das Einsaugen staubbeladener Luft aus dem Fahrzeuginnenraum in die Ausnehmungen infolge Druckdifferenz zwischen den Oberflächen des Verkleidungselements verhindert, so dass einem Verstopfen der Ausnehmungen entgegengewirkt wird.

Die Erfindung betrifft ferner ein Verfahren zur Herstellung derartiger Verkleidungselemente, bei dem zuerst ein ebenes, plattenförmiges Bauteil (2) hergestellt wird, in welches nachfolgend die Ausnehmungen eingebracht und das textile, luftdurchlässige Flächengebilde (7) sowie die luftundurchlässige Sperrschicht (8) aufgebracht werden. Das plattenförmige Bauteil wird zu einer dreidimensionalen Struktur verformt und in einem letzten Schritt auf die einbaufertige Kontur zugeschnitten.

## Beschreibung

Die Erfindung betrifft ein Verkleidungselement für den Innenraum eines Fahrzeugs, insbesondere den Dachhimmel eines Kraftfahrzeugs, umfassend ein mit Ausnehmungen versehenes, plattenförmiges Bauteil, das mit einem textilen, luftdurchlässigen Flächengebilde verkleidet ist.

### Stand der Technik

Aus der Offenlegungsschrift DE 199 20 969 A1 ist ein gattungsgemäßes Verkleidungselement bekannt. Es besteht aus einer perforierten Platte oder Folie, deren Durchbrüche einen Durchmesser von 0,001 bis 2 mm, insbesondere von 0,01 bis 0,7 mm aufweisen und deren Lochfläche bis zu 20% der Gesamtfläche der Platte oder Folie beträgt. Dieses Bauteil weist schalldämmende und schalldämpfende Eigenschaften auf und kann zu einer weiteren akustischen Verbesserung mit einer porösen Absorberschicht, beispielsweise einem Vliesstoff aus Baumwollfasern überzogen werden. Die genannte Schrift offenbart nicht, auf welcher Seite des gelochten Grundkörpers die Absorberschicht aufgebracht wird.

Das vorbekannte Bauteil kann in verschiedenen Bereichen des Fahrzeuginnenraums Verwendung finden, so auch als Innenverkleidung für das Fahrzeugdach (Dachhimmel), als Hutablage oder als Türverkleidung.

Beim Einsatz perforierter, plattenförmiger Bauteile mit einer rauminnenseitigen Verkleidung aus einem textilen, luftdurchlässigen Flächengebilde wird insbesondere beim Einsatz als Dachhimmel, bedingt durch die im Fahrbetrieb stets wechselnde Druckdifferenz beiderseits des Dachhimmels, Luft aus dem Fahrzeuginnenraum durch den rauminnenseitigen textilen Überzug in die Ausnehmungen gesaugt und nachfolgend wieder ausgestoßen. Da der textile Bezug in der Praxis häufig nach optischen Kriterien ausgewählt wird und nicht als Feinpartikelfilter geeignet ist, wird mit dem Ansaugen der Luft auch Staub in die Ausnehmungen eingetragen, der sich dort absetzt und mit dem Ausstoßen der Luft zum Fahrzeuginnenraum nicht mehr vollumfänglich abgeführt wird. Mit der Zeit können sich die Ausnehmungen daher zusetzen, wodurch sie ihre akustische Funktion im Wesentlichen verlieren. Diese Erscheinung tritt naturgemäß bei extrem feinen Durchbrüchen weniger häufig, mit deren wachsender radialer Ausdehnung jedoch verstärkt auf.

### Aufgabe

Der Erfindung liegt die Aufgabe zugrunde, ein zum Einbau in einen Fahrzeuginnenraum geeignetes, geräuschminderndes Plattenbauteil anzubieten, dass seine guten akustischen Eigenschaften auch nach längerer Betriebszeit nicht einbüßt.

### Lösung

Die Aufgabe wird erfindungsgemäß dadurch gelöst, dass das textile Flächengebilde innenraumseitig angeordnet und das plattenförmige Bauteil auf seiner der Fahrzeugkarosserie zugewandten Seite mit einer luftundurchlässigen Sperrschicht versehen ist. Das Verkleidungselement trennt also zwei Räume, beispielsweise den Fahrzeuginnenraum und den Zwischenraum zwischen Fahrzeugkarosserie und Dachhimmel, luftdicht voneinander ab. Durch diese Ausbildung kann der Schall zwar durch den luftdurchlässigen, textilen Bezug vom Fahrzeuginneren her in den Durchbrüchen absorbiert werden, die eingangs genannte Luftpulsation durch die an den Oberflächen des Verkleidungselements anliegende, schwankende Druckdifferenz wird durch die außenseitige luftundurchlässige Sperrschicht jedoch im Wesentlichen unterbunden. Diese Vorzüge lassen sich nicht nur bei Dachhimmeln, sondern auch bei beliebigen anderen plattenförmigen Einbauten erzielen, sofern sie der beschriebenen Druckdynamik unterliegen. Dies ist insbesondere bei Verkleidungselementen der Fall, die einen Innenraum von einer Blechstruktur der Fahrzeugkarosserie abtrennen, beispielsweise bei der Innenverkleidung einer Fahrzeugtür.

Die erfindungsgemäß aufgebrachte Sperrschicht kann, sofern die Ausnehmungen das plattenförmige Bauteil vollständig durchdringen, beispielsweise als luftundurchlässige Folie, aus Polyurethan ausgebildet werden. Diese kann im einfachsten Fall flächig auf der Rückseite des plattenförmigen Bauteils fixiert werden. Nach einer besonderen Ausbildung der Erfindung wird die Folie jedoch nur örtlich, zumindest jedoch im Bereich ihres vollen Umfangs mit dem plattenförmigen Bauteil verbunden. Sie verhindert auf diese Weise zwar wirkungsvoll die makroskopische Luftpulsation, fungiert infolge ihrer mikroskopischen Schwingungen aber ihrerseits als membranartiges Schallabsorptionselement.

Nach einer anderen bevorzugten Ausführungsform ist zwischen der luftundurchlässigen Sperrschicht und dem plattenförmigen Bauteil ein luftdurchlässiger Absorptionskörper, insbesondere aus offenporigem Polyurethanoder Polyesterschaum angeordnet. Dieser dient ebenfalls der zusätzlichen Schallreduzierung, der Pumpeffekt wird jedoch durch die luftundurchlässige Sperrschicht unterbunden. Mit Vorteil wird die luftundurchlässige Sperrschicht durch den Verschluss der karosserieseitigen Struktur des Absorptionskörpers erzeugt, beispielsweise durch das Besprühen mit einem sich verfestigenden Dichtmaterial oder dem Erhitzen und Verschmelzen der betreffenden Oberfläche des Schaumkörpers.

Grundsätzlich ist es ferner möglich, die luftundurchlässige Sperrschicht einstückig an das plattenförmige Bauteil angeformt auszubilden, wobei die Ausnehmungen von der Innenseite her nur teilweise in das plattenförmige Bauteil eindringen. Dies kann beispielsweise durch ein das plattenförmige Bauteil nur unvollständig durchdringendes Bohren oder das Einpressen erhitzter Stempel erfolgen.

Die Ausnehmungen weisen bevorzugt einen kreisförmigen Querschnitt auf, da durch diese Ausbildung Kerben im plattenförmigen Bauteil vermieden werden. Mit Vorteil verengen sich die Ausnehmungen konisch, wodurch deren Einbringung mittels eines Stanzwerkzeugs vereinfacht wird. Akustisch besonders günstig ist dabei eine Verjüngung zur Innenraumseite hin, da auf diese Weise das Rückstrahlen des Schalls in den Fahrzeuginnenraum vermindert wird.

Der kleinste Durchmesser der Ausnehmungen beträgt vorzugsweise zwischen 1,5 mm und 10 mm, insbesondere zwischen 2,5 mm und 5 mm. Sie können matrixförmig im plattenförmigen Bauteil angeordnet werden, wobei der kleinste Mittelpunktabstand der Ausnehmungen bevorzugt das 2 bis 20fache, insbesondere das 5 bis 10fache des kleinsten Durchmessers beträgt.

Das Verkleidungselement kann nach einer Ausbildung der Erfindung eine komplexe, dreidimensionale Gestalt aufweisen, wobei die Ausnehmungen in im Wesentlichen ebenen Bereichen des Verkleidungselements angeordnet sind und die Umformung des ursprünglich ebenen Rohlings nicht behindern.

Das plattenförmige, perforierte Bauteil umfaßt mit Vorteil eine Grundplatte aus im Wesentlichen geschlossenzelligem Schaumwerkstoff, insbesondere aus thermoplastischem Polyurethanschaum. Der Schaumwerkstoff kann zur Verbesserung seiner mechanischen Eigenschaften zumindest einseitig mit einem Vliesmaterial, insbesondere mit einem Glasfaservlies kaschiert werden. Ein aussenseitig angebrachtes Vliesmaterial kann seinerseits mit einem zweiten Vliesmaterial, insbesondere mit einem Polyestervlies kaschiert werden, wobei die Ausnehmungen zumindest innenseitig sowohl die Grundplatte als auch die aufkaschierten Vliesmaterialien erfassen.

Zwischen dem plattenförmigen Bauteil und dem textilen Flächengebilde, also auf der dem Fahrzeuginnenraum zugewandten Seite des Verkleidungselements, kann ferner ein flexibler luftdurchlässiger Schaumstoff angeordnet werden, insbesondere ein offenporiger Polyurethanschaum. Dieser gibt dem Verkleidungselement einen "Soft-Touch" und erhöht dessen Wertanmutung.

Die Ansprüche 16 bis 25 betreffen bevorzugte Verfahren zur Herstellung erfindungsgemäßer Verkleidungselemente, wobei die in Anspruch 16 genannte Reihenfolge der Verfahrensschritte zwar vorteilhaft, aber nicht bindend ist.

### Figuren

Die Figuren stellen beispielhaft und schematisch verschiedene Ausführungen der Erfindung dar.

Es zeigen:
- Fig. 1: die perspektivische Ansicht eines Ausschnitts aus einem ersten erfindungsgemäßen Verkleidungselement
- Fig. 2: einen entsprechenden Ausschnitt aus einem Verkleidungselement nach einer anderen Ausführung der Erfindung
- Fig. 3: ein drittes erfindungsgemäßes Verkleidungselement
- Fig. 4: ein Verkleidungselement in Form eines Dachhimmels für einen Personenkraftwagen

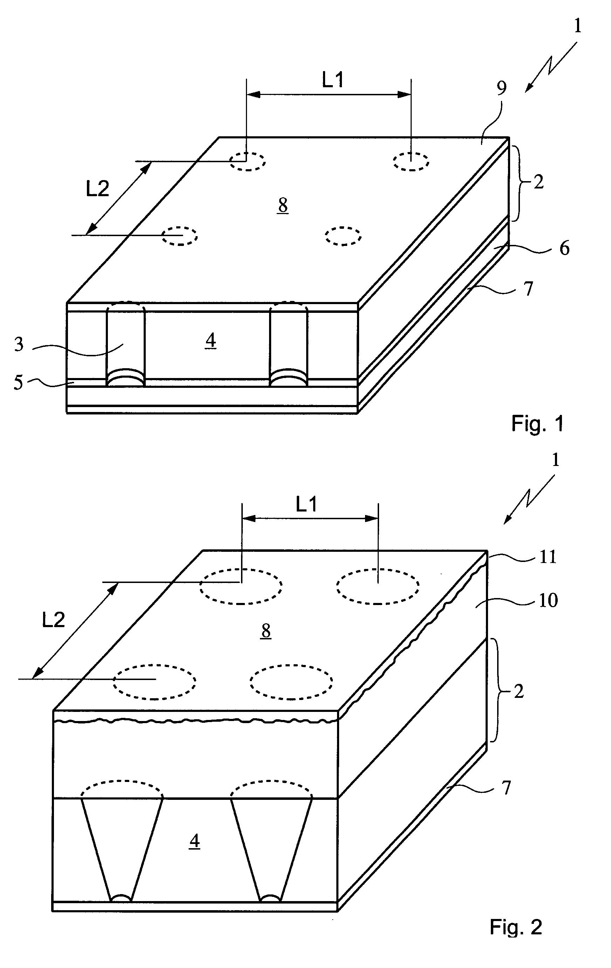

Aus Fig. 1 ist der prinzipielle Aufbau eines mehrlagigen Verkleidungselements 1 ersichtlich, das ein plattenförmiges Bauteil 2 aufweist, das mit zylindrischen Ausnehmungen 3 versehen ist. Das plattenförmige Bauteil 2 besteht seinerseits aus einer Grundplatte 4 aus einem geschlossenzelligen, luftundurchlässigen Schaumwerkstoff, der eine relativ hohe Steifigkeit aufweist und thermoplastisch verformbar ist, und einem Vliesmaterial 5. Die Ausnehmungen durchdringen das plattenförmige Bauteil 2 insgesamt, erfassen also auch das auf die Grundplatte aufkaschierte Vliesmaterial 5.

Als Schaumwerkstoff für die Grundplatte kann beispielsweise ein geschlossenzelliger Polyurethanschaum mit einem Raumgewicht von 50 kg/m³ eingesetzt werden, als Vliesmaterial ein Glas- oder Polyestervlies.

Zum Innenraum des Fahrzeugs hin ist das plattenförmige Bauteil 2 zuerst mit einer flexiblen, luftdurchlässigen Schaumstofflage 6, beispielsweise aus einem offenporigen Polyurethanschaum und nachfolgend mit dem vom Fahrzeuginnenraum her sichtbaren textilen Flächengebilde 7 verkleidet, die ebenfalls luftdurchlässig ausgebildet ist. Karosserieseitig ist das plattenförmige Bauteil 2 hingegen mit einer luftundurchlässigen Sperrschicht 8 in Form einer Folie 9 bedeckt, welche die Ausnehmungen zur Karosserie hin verschliesst. Die Folie 9 kann beispielsweise als selbstklebende Polyurethanfolie mit einer Dicke von 25 µm ausgebildet sein.

Die Ausnehmungen 3 im Verkleidungselement 1 können daher, wie aus dem Stand der Technik grundsätzlich bekannt, ihre schallabsorbierenden Eigenschaften entfalten, ein Luftaustausch zwischen den Räumen dies- und jenseits des Verkleidungselements 1 mit den eingangs genannten Nachteilen wird jedoch vermieden.

Die zylindrischen Ausnehmungen 3 sind in Form einer Matrix angeordnet, wobei die Mittelpunkte der Ausnehmungen in einer Achse der Matrix einen Abstand L1 und in der hierzu orthogonalen Matrixachse den Abstand L2 aufweist. Die Abstände L1 und L2 betragen zwischen 1,5 mm und 10 mm, insbesondere zwischen 2,5 mm und 5 mm und können sowohl identische als auch voneinander abweichende Werte annehmen. Selbstverständlich ist auszuschließen, dass sich die Ausnehmungen überschneiden.

Das Verkleidungselement 1 nach Fig. 2 umfasst ebenfalls ein plattenfrömiges Bauteil 2, das ausschliesslich aus der von den Ausnehmungen 3 vollständig durchdrungenen Grundplatte 2 besteht. Innenseitig ist ein Bezug aus dem luftdurchlässigen, textilen Flächengebilde, aussenseitig ein Absortionskörper 10 aus einem kleinzelligen, offenporigen Polyesterschaum mit einem Raumgewicht von 55 kg/m³, der eine Luftdurchlässigkeit von etwa 75 Liter/min aufweist. Karosserieseitig ist der Absorptionskörper 10 mit einer Sperrschicht 8 versehen, die durch Aufbringen einer Acrylat-Sprühschicht 11 erzeugt wird. Letztere verklebt die Poren auf der äußeren Oberfläche des Absorptionskörpers 10 luftdicht. In Abhängigkeit von der geometrischen Ausbildung kann es dabei auch erforderlich sein, die seitlichen Oberflächen des Absorptionskörpers entsprechend abzudichten. Anstelle der Acrylat-Sprühschicht 11 kann selbstverständlich auch eine luftdichte Folie auf den Absorptionskörper 10 aufkaschiert werden.

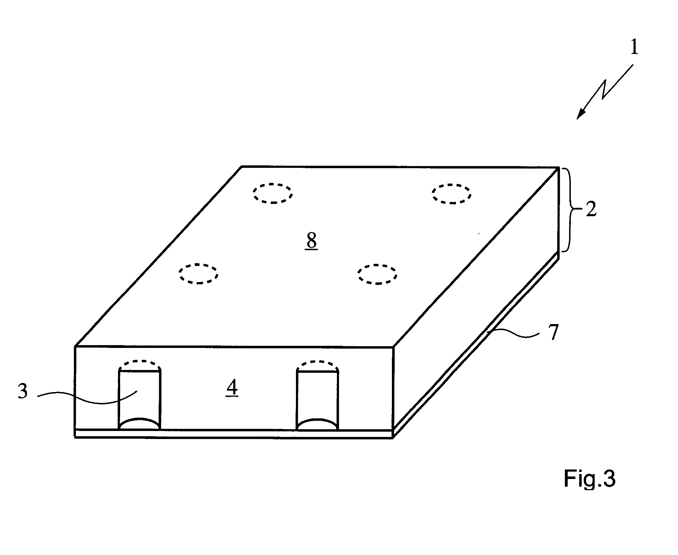

Fig. 3 zeigt eine Ausführung, bei der die Ausnehmungen 3 das plattenförmige Bauteil von der Rauminnenseite her nur unvollständig durchdringen, so dass die Sperrschicht 8 einstückig an die Grundplatte 4 angeformt ist.

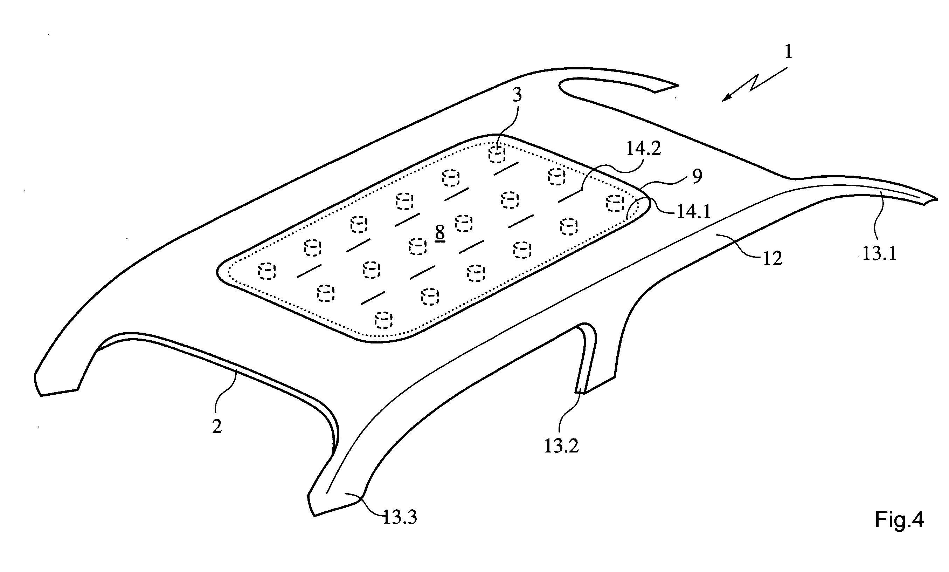

In Fig. 4 ist ein erfindungsgemäßes Verkleidungselement 1 in Form eines dreidimensional ausgeformten Dachhimmels 12 dargestellt. Der Dachhimmel 12 weist Bereiche auf, in denen das ursprünglich ebene, plattenförmige Bauteil 2 erheblich umgeformt wurde, beispielsweise an den Vorsprüngen 13.1 bis 13.3 für die Verkleidung der A-, B- und C-Säulen. Der mittlere Dachbereich hingegen ist nach wie vor vergleichsweise eben, so dass die dort angeordneten, das plattenförmige Bauteil 2 durchdringenden Ausnehmungen 3 den Umformprozess nicht beeinträchtigen.

Außenseitig ist die Sperrschicht 8 erneut in Form einer Folie 9 auf das plattenförmige Bauteil 2 aufgebracht. Die Folie 9 ist dabei mittels einer entlang ihres Umfang vollständig umlaufenden ersten Klebstoffraupe 14.1 und einer Vielzahl innerhalb ihres Umfangs örtlich angeordneter Klebstoffraupen 14.2 zwar gasdicht, aber doch in gewissem Masse zur äusseren Oberfläche des plattenartigen Bauteils 2 beweglich fixiert. Auf diese Weise kann sie neben der Abdichtfunktion auch die Wirkung eines Membranabsorbers entfalten.

### Bezugszeichen

- 1: Verkleidungselement
- 2: plattenförmiges Bauteil
- 3: Ausnehmung
- 4: Grundplatte
- 5: Vliesschicht
- 6: Schaumstofflage
- 7: textiles Flächengebilde
- 8: Sperrschicht
- 9: Folie
- 10: Absorptionskörper
- 11: Acrylat-Sprühschicht
- 12: Dachhimmel
- 13: Vorsprung
- 14: Klebstoffraupe

## Patentansprüche

1. Verkleidungselement (1) für den Innenraum eines Fahrzeugs, insbesondere Dachhimmel (12) eines Kraftfahrzeugs, umfassend ein mit Ausnehmungen (3) versehenes, plattenförmiges Bauteil (2), das mit einem textilen, luftdurchlässigen Flächengebilde (7) verkleidet ist, **dadurch gekennzeichnet, dass** das textile Flächengebilde (7) innenraumseitig angeordnet und das plattenförmige Bauteil (2) auf seiner der Fahrzeugkarosserie zugewandten Seite mittels einer Sperrschicht (8) luftdicht verschließbar ist.

2. Verkleidungselement nach Anspruch 1, **dadurch gekennzeichnet, dass** die Ausnehmungen (3) das plattenfömige Bauteil (2) vollständig durchdringen und die Sperrschicht (8) als luftundurchlässige Folie (9), insbesondere als selbstklebende Polyurethanfolie ausgebildet ist.

3. Verkleidungselement nach Anspruch 2, **dadurch gekennzeichnet, dass** die Folie (9) nur örtlich, zumindest jedoch im Bereich ihres vollen Umfangs mit dem plattenförmigen Bauteil (2) verbunden ist.

4. Verkleidungselement nach einem der vorhergehenden Ansprüche, **dadurch gekennzeichnet, dass** zwischen der luftundurchlässigen Sperrschicht (8) und dem plattenförmigen Bauteil (2) ein luftdurchlässiger Absorptionskörper (10), insbesondere aus offenporigem Polyurethan- oder Polyesterschaum angeordnet ist.

5. Verkleidungselement nach Anspruch 4, **dadurch gekennzeichnet, dass** die luftundurchlässige Sperrschicht (8) als Verschluss der karosserieseitigen Struktur des Absorptionskörpers (10) ausgebildet ist.

6. Verkleidungselement nach Anspruch 1, **dadurch gekennzeichnet, dass** die luftundurchlässige Sperrschicht (8) einstückig an das plattenförmige Bauteil (2) angeformt ist.

7. Verkleidungselement nach einem der vorhergehenden Ansprüche, **dadurch gekennzeichnet, dass** die Ausnehmungen (3) einen kreisförmigen Querschnitt aufweisen.

8. Verkleidungselement nach Anspruch 7, **dadurch gekennzeichnet, dass** sich die Ausnehmungen (3) insbesondere zur Innenraumseite hin konisch verengen.

9. Verkleidungselement nach Anspruch 7 oder 8, **dadurch gekennzeichnet, dass** der kleinste Durchmesser der Ausnehmungen (3) zwischen 1,5 mm und 10 mm, insbesondere zwischen 2,5 mm und 5 mm beträgt.

10. Verkleidungselement nach einem der vorhergehenden Ansprüche, **dadurch gekennzeichnet, dass** die Ausnehmungen (3) matrixförmig mit einem kleinsten Mittelpunktabstand angeordnet sind, der das 2 bis 20fache, insbesondere das 5 bis 10fache ihres kleinsten Durchmessers beträgt.

11. Verkleidungselement nach einem der vorhergehenden Ansprüche, **dadurch gekennzeichnet, dass** das Verkleidungselement (1) eine komplexe, dreidimensionale Gestalt aufweist, wobei die Ausnehmungen (3) in im Wesentlichen ebenen Bereichen des Verkleidungselements angeordnet sind.

12. Verkleidungselement nach einem der vorhergehenden Ansprüche, **dadurch gekennzeichnet, dass** das plattenförmige Bauteil (2) eine Grundplatte (4) aus im Wesentlichen geschlossenzelligem Schaumwerkstoff, insbesondere aus thermoplastischem Polyurethanschaum umfaßt.

13. Verkleidungselement nach Anspruch 12, **dadurch gekennzeichnet, dass** der im Wesentlichen geschlossenzellige Schaumwerkstoff zumindest einseitig mit einem Vliesmaterial (5), insbesondere mit einem Glasfaservlies kaschiert ist.

14. Verkleidungselement nach einem der vorhergehenden Ansprüche, **dadurch gekennzeichnet, dass** das auf der dem Innenraum abgewandten Seite angeordnete Glasfaservlies seinerseits mit einem zweiten Vliesmaterial, insbesondere mit einem Polyestervlies kaschiert ist.

15. Verkleidungselement nach einem der vorhergehenden Ansprüche, **dadurch gekennzeichnet, dass** zwischen dem plattenförmigen Bauteil (2) und dem textilen Flächengebilde (7) eine flexible, luftdurchlässige Schaumstofflage (6), insbesondere aus einem offenporigen Polyurethanschaum angeordnet ist.

16. Verfahren zur Herstellung des Verkleidungselements nach Anspruch 1, **gekennzeichnet durch** die Schritte
- Herstellung eines ebenen, plattenförmigen Bauteils (2)
- Einbringen der Ausnehmungen in das plattenförmige Bauteil
- Aufbringen des textilen, luftdurchlässigen Flächengebildes (7)
- Aufbringen der luftundurchlässigen Sperrschicht (8)
- Verformen des plattenförmigen Bauteils zu einer dreidimensionalen Struktur
- Zuschneiden der dreidimensionalen Struktur auf die einbaufertige Kontur

17. Verfahren nach Anspruch 16, **dadurch gekennzeichnet, dass** das Verformen des plattenförmigen Bauteils (2) zu einer dreidimensionalen Struktur sowie das Aufbringen des textilen Flächengebildes (7) und/oder einer als Folie (9) ausgebildeten Sperrschicht (8) im Wesentlichen zeitgleich erfolgen.

18. Verfahren nach Anspruch 16, **dadurch gekennzeichnet, dass** das textile Flächengebilde (7) und/oder die Folie (9) auf das plattenförmige Bauteil (2) aufgeklebt werden.

19. Verfahren nach Anspruch 16, **dadurch gekennzeichnet, dass** nach dem Verformen des plattenförmigen Bauteils (2) ein luftdurchlässiger Absorptionskörper (10) auf dessen Außenseite aufgebracht wird, dessen äußere Oberfläche vorher, gleichzeitig oder nachfolgend mit einer Sperrschicht (8) versehen wird.

20. Verfahren nach Anspruch 19, **dadurch gekennzeichnet, dass** die äußere Oberfläche des Absorptionskörpers (10) durch Aufbringen einer verflüssigten Sperrschicht (8) abgedichtet wird.

21. Verfahren nach Anspruch 20, **dadurch gekennzeichnet, dass** die verflüssigte Sperrschicht (8) durch Aufsprühen, Aufwalzen oder Aufrakeln auf die äußere Oberfläche des Absorptionskörpers (10) aufgebracht wird.

22. Verfahren nach Anspruch 19, **dadurch gekennzeichnet, dass** die Sperrschicht (8) in Form einer Folie (9) auf den Absorptionskörper (10) aufgebracht wird.

23. Verfahren nach einem der Ansprüche 16 bis 22, **dadurch gekennzeichnet, dass** die Ausnehmungen (3) durch Stanzen in das plattenförmige Bauteil (2) eingebracht werden.

24. Verfahren nach einem der Ansprüche 16 bis 22, **dadurch gekennzeichnet, dass** die Ausnehmungen (3) durch das plattenförmige Bauteil (2) vollständig oder unvollständig durchdringendes Bohren eingebracht werden.

25. Verfahren nach einem der Ansprüche 16 bis 22, **dadurch gekennzeichnet, dass** die Ausnehmungen (3) durch Einpressen erhitzter Stempel in das plattenförmige Bauteil (2) eingebracht werden.
